# EUROPEAN PATENT APPLICATION

(11) **EP 4 607 755 A1**
(43) Date of publication of application: **27.08.2025**
(21) Application number: 24159323.5
(22) Date of filing: 23.02.2024
(51) Int. Cl.: H02J 50/12, H02J 50/80, H04B 5/79

(54) **WIRELESS POWER TRANSFER**

(71) Applicant: Koninklijke Philips N.V., 5656 AG Eindhoven (NL)
(72) Inventor: LULOFS, Klaas Jakob, 5656 AG Eindhoven (NL); DRAAK, Johannes Wilhelmus, 5656 AG Eindhoven (NL); ETTES, Wilhelmus Gerardus Maria, 5656 AG Eindhoven (NL)
(74) Representative: Philips Intellectual Property & Standards

(57) **Abstract**

A power transmitter (101) wirelessly provides power to a power receiver (105) via a power transfer signal. A driver (201) generates the power transfer signal to employ a repeating time frame comprising a power transfer time interval and a communication time interval. A communication unit (205) and power transfer coil (103) communicate with the power receiver (105) using modulation of the communication carrier signal during communication time intervals. A transition controller (209) controls the drive signal to perform a power level transition between a higher power level during a power transfer time interval and a lower power level of a communication time interval closest to the power transfer time interval. The power transmitter further includes an adapter (211) which adapts a property of the power level transition in dependence on a power level operating point for the power transfer. For example, faster transition may be performed at lower power transfer levels than at higher power transfer levels.

## Description

### FIELD OF THE INVENTION

The invention relates to operation of a wireless power transfer system.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain). Based on the Qi Specification, an approach known as the Ki specification is being developed for high power applications, such as specifically for Kitchen appliances. Ki supports much higher power levels up to (currently) 2.5KW.

In many systems, such as specifically Qi systems, communication from the power receiver to the power transmitter may use load modulation where a load of the power transfer signal is varied in dependence on the data to be transmitted. Similarly, communication from the power transmitter to the power receiver may be achieved by modulating the power transfer signal (e.g. amplitude or frequency modulation) but interference to such modulation may be caused by variations in the parameters of the power transfer signal due to e.g. a varying load.

In some systems it has accordingly been proposed to use a completely separate communication approach. Specifically, Ki wireless power transfer systems may establish a two way communication link using the Near Field Communication, NFC, standard. However, despite such communication being separated from the power transfer and typically using very different frequencies, the power transfer may still cause interference to the communication, especially for higher power levels of the power transfer.

In order to reduce the impact of such interference, it has been proposed to interrupt the power transfer periodically to create time intervals where the power transfer is switched off and the communication is performed. In such approaches communication is during the power transfer phase typically performed in short time intervals during which power transfer is interrupted.

However, whereas such an approach may provide improved communication it also has a number of associated disadvantages. In many scenarios, the switching of the power transfer may create interference to the communication, as well as general electromagnetic interference that may affect other nearby electrical equipment (including potentially the circuits of the power receiver, or indeed to the circuits of the power transmitter itself). Further, as the periodicity of the time intervals during which the power transfer is interrupted tends to be relatively low (e.g. 50Hz or 100Hz), the variations in the generated electromagnetic field occur at low frequencies. This may in some cases result in audio noise being generated in the power transmitter, power receiver and/or other entities,

Hence, an improved operation for a wireless power transfer system would be advantageous, in particular, an approach allowing increased flexibility, reduced cost, reduced complexity, improved communication, reduced electromagnetic interference, reduced acoustic noise, improved power transfer, improved efficiency, improved trade-offs, improved functionality, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided a power transmitter for wirelessly providing power to a power receiver via an inductive power transfer signal, the power transmitter comprising: a power transfer coil arranged to generate the power transfer signal; a driver arranged to generate a drive signal for the power transfer coil, the driver being arranged to, during a power transfer phase, generate the drive signal to employ a repeating time frame comprising at least a power transfer time interval and a communication time interval; a communication coil arranged to generate a communication carrier signal during communication time intervals; a communication unit arranged to communicate with the power receiver using modulation of the communication carrier signal during communication time intervals; a transition controller arranged to control the drive signal to perform (or exhibit) a power level transition between a higher power level of the drive signal during a power transfer time interval and a lower power level of a communication time interval closest (typically adjacent) to the power transfer time interval, the higher power level exceeding the lower power level by a factor of at least two times; and an adapter arranged to adapt a property of the power level transition in dependence on a power level operating point for the power transfer.

The invention may provide improved performance in many embodiments, and may provide an overall improved power transfer operation in many systems and embodiments. It may in particular in many scenarios reduce electromagnetic interference and may for example facilitate or allow e.g. regulatory electromagnetic interference limits to be met. The approach may in many embodiments reduce and/or mitigate audible noise caused by the power transfer signal e.g. in enclosures or other mechanical parts, including of the power transmitter or power receiver itself. The approach may in many scenarios allow increased efficiency and may in some scenarios allow faster switching with less power loss. The approach may in many cases allow an improved trade-off between conflicting requirements such as between electromagnetic interference/audible or mechanical noise on one hand and power efficiency on the other hand. The approach may in many scenarios allow improved adaptation to current conditions and the current power transfer.

The higher power level may in many scenarios exceed the lower power level by a factor of at least five or ten times.

The transition controller may be arranged to transition from the first level to the second level at the beginning of a communication time interval and/or at the end of a power transfer time interval. The transition controller may be arranged to transition from the second level to the first level at the end of a communication time interval and/or at the beginning of a power transfer time interval.

The transition controller may be arranged to transition the drive signal between a power transfer interval power level being a power level of the power transfer signal during power transfer time intervals and a communication time interval power level being a power level of the power transfer signal during power transfer interval.

The power level operating point may be a power control operating point. The power level operating point may be controlled by a power control loop. The power level operating point may be a reserved or requested (by the power receiver) power level.

The driver may be arranged to generate the drive signal, and thus the power transfer signal, to have a non-zero amplitude during the power transfer time intervals and to have a zero amplitude during communication time intervals.

The communication driver may be arranged to generate the communication carrier signal, to have a non-zero amplitude only in communication time intervals.

The communication time interval closest to the power transfer time interval may typically be a communication time interval adjacent to the power transfer time interval.

In accordance with an optional feature of the invention, the property of the power level transition includes a timing property of the transition.

This may allow improved operation and/or facilitate implementation and/or operation in many embodiments. It may typically provide a particularly advantageous adaption and improved trade-off between e.g. electromagnetic interference/audible noise and power transfer efficiency for different operating conditions.

In accordance with an optional feature of the invention, the timing property is at least one of a rate of change and a duration of the transition.

This may provide a particularly advantageous adaption. It may in many embodiments allow a particular efficient and/or facilitated implementation. In many embodiments, the parameters may be particularly suitable for dynamic adaptation.

In accordance with an optional feature of the invention, the adapter is arranged to increase a duration of the transition for an increasing level of the power level operating point.

It may typically provide a particularly advantageous trade-off between e.g. electromagnetic interference/audible noise and power transfer efficiency for different operating conditions.

In many embodiments, the adapter may be arranged to reduce a rate of change for the transition for an increasing level of the power level operating point.

The level of the power level operating point may be the power level of the power transfer at the current operating point.

In accordance with an optional feature of the invention, the adapter is arranged to select a first value for the property of the power level transition for a value of the power level operating point being below a first threshold and to select a second value for the property of the power level transition for the value of the power level operating point being above a second threshold, the first threshold not exceeding the second threshold.

This may often allow acceptable performance while allowing very low complexity implementation.

In many embodiments, at least one of the first and the second threshold is between 500W and 1kW.

In accordance with an optional feature of the invention, the property of the power level transition is a transition profile/shape.

This may allow improved operation and/or facilitate implementation and/or operation in many embodiments. It may typically provide an improved trade-off between e.g. electromagnetic interference/audible noise and power transfer efficiency for different operating conditions.

The transition profile/shape may be the (normalized) power level as a function of time during the transition interval.

In accordance with an optional feature of the invention, the adapter is arranged to adapt the transition profile to have reduced higher frequency components for an increasing level of the power level operating point.

In many embodiments, the adapter may be arranged to adapt the transition profile to have reduced concentration of energy around harmonic frequencies for an increasing level of the power level operating point.

Such approaches may typically provide an improved trade-off between e.g. electromagnetic interference/audible noise and power transfer efficiency for different operating conditions.

In accordance with an optional feature of the invention, the power level transition is from the lower power level to the higher power level. The transition may be from the communication time interval to the power transfer time interval.

In accordance with an optional feature of the invention, the power level transition is from the higher power level to the lower power level. The transition may be from the power transfer time interval to the communication time interval.

This may allow improved operation and/or facilitate implementation and/or operation in many embodiments. It may typically provide an improved trade-off between e.g. electromagnetic interference/audible noise and power transfer efficiency for different operating conditions.

In accordance with an optional feature of the invention, the power transmitter of any previous claim wherein the adapter is arranged to determine the power level operating point as a function of a supply power property for a power supply to at least an output circuit of the power transfer driver.

This may allow improved operation and/or facilitate implementation and/or operation in many embodiments.

In accordance with an optional feature of the invention, the adapter is arranged to set the power level transition to be a step transition in response to a determination that a value of the power level operating point is less than a threshold.

This may allow improved operation and/or facilitate implementation and/or operation in many embodiments.

In accordance with an optional feature of the invention, the power transmitter comprises a synchronizer arranged to synchronize the communication time intervals to minima of a periodically varying power supply for at least an output circuit of the power transfer driver.

In accordance with an optional feature of the invention, a duration of the power level transition does not exceed 5 msec.

In accordance with an optional feature of the invention, the power transmitter comprises a power control loop arranged to control the power level operating point in response to power control messages received from the power receiver.

According to an aspect of the invention there is provided a method of operation for a power transmitter for wirelessly providing power to a power receiver via an inductive power transfer signal, the method comprising: a power transfer coil generating the power transfer signal; generating a drive signal for the power transfer coil during a power transfer phase to employ a repeating time frame comprising at least a power transfer time interval and a communication time interval; a communication coil generating a communication carrier signal during communication time intervals; communicating with the power receiver using modulation of the communication carrier signal during communication time intervals; controlling the drive signal to perform a power level transition between a higher power level of the drive signal during a power transfer time interval and a lower power level of a communication time interval closest to the power transfer time interval, the higher power level exceeding the lower power level by a factor of at least two times; and adapting a property of the power level transition in dependence on a power level operating point for the power transfer.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of elements of a power transfer system in accordance with some embodiments of the invention;
FIG. 2 illustrates an example of elements of a power transmitter in accordance with some embodiments of the invention;
FIG. 3 illustrates an example of elements of a power receiver in accordance with some embodiments of the invention;
FIG. 4 illustrates an example of a time frame for a wireless power transfer system in accordance with some embodiments of the invention;
FIG. 5 illustrates an example of a power transfer signal and a communication carrier signal in a wireless power transfer system; and
FIG. 6 illustrates an example of an interrupted power transfer approach in accordance with some embodiments of the invention.

### DETAILED DESCRIPTION OF THE EMBODIMENTS

The following description focuses on embodiments of the invention applicable to a wireless power transfer system utilizing a power transfer approach such as known from the Ki specification. However, it will be appreciated that the invention is not limited to this application but may be applied to many other wireless power transfer systems.

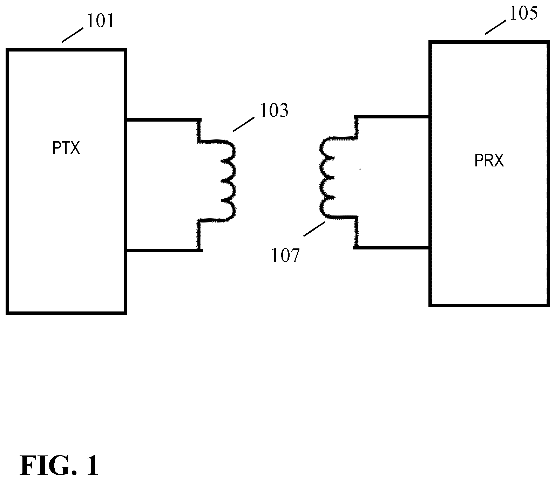

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may correspond to the electromagnetic power transfer component representing the energy transfer from the power transmitter to the power receiver, and may be considered to correspond to the component of the generated electromagnetic field that transfers power from the power transmitter to the power receiver. For example, if there is no loading of the receive coil 107, no power will be extracted by the power receiver from the generated electromagnetic field (apart from losses). In such a scenario, the driving of the transmitter coil 103 may generate an electromagnetic field of potentially high field strength but the power level of the power transfer signal will be zero (apart from losses). In some situations, where a foreign object is present, the power transfer signal may be considered to include a component corresponding to the power transfer to the foreign object, and thus the power transfer signal may be considered to correspond to the power being extracted from the electromagnetic field generated by the power transmitter.

The power transfer signal may typically have a frequency between around 20 kHz to around 500 kHz, and for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal! magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element. The power receiver may accordingly provide a load to the power transfer signal by comprising an inductive power extraction element which specifically may be a power extraction coil or an electrical (e.g. heating) element in which current is induced by the power transfer signal.

The system is arranged to transfer substantial power levels, and specifically the power transmitter may support power levels in excess of 50W, 100W, 500W, or 1 kW. For example, for Ki type applications, the power transfers may often be in excess of 100 W, and may be up to more than 2500W for very high power applications.

In the following, the operation of the power transmitter 101 and the power receiver 105 will be described with specific reference to an embodiment generally in accordance with the Specifications (except for the herein described (or consequential) modifications and enhancements) being developed by the Wireless Power Consortium. In particular, the power transmitter 101 and the power receiver 105 may follow, or substantially be compatible with, elements of the Ki Standards.

Many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

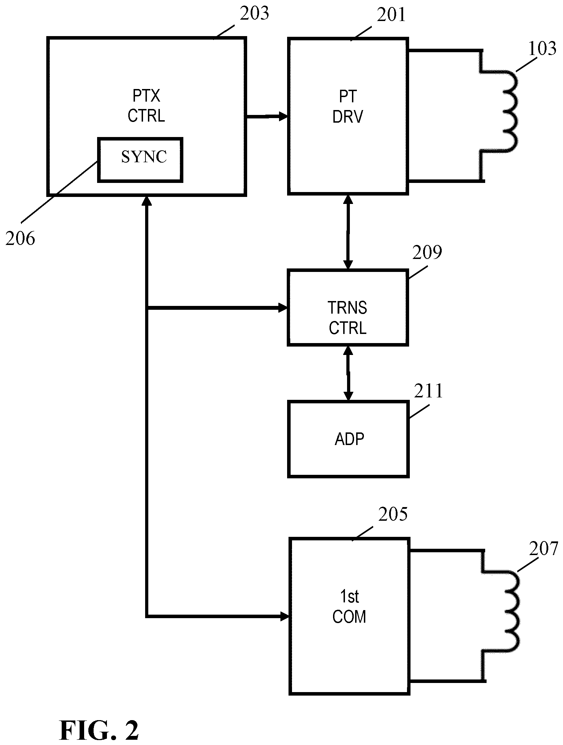

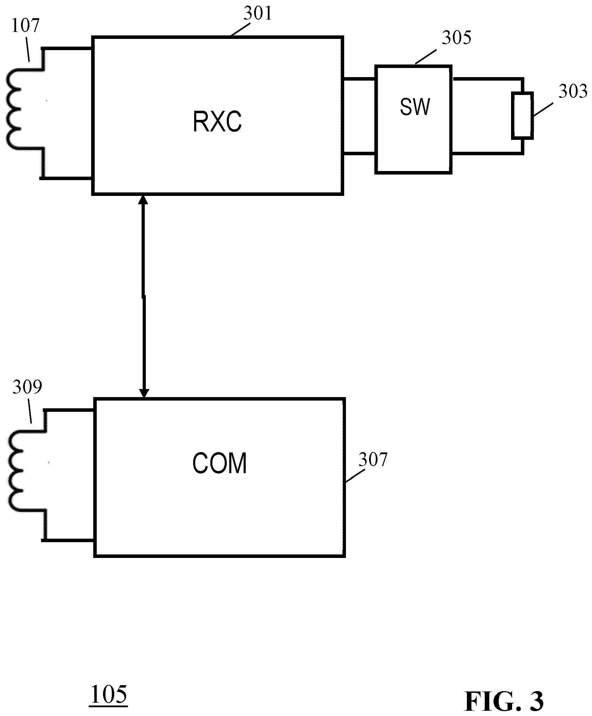

FIG. 2 illustrates elements of the power transmitter 101 and FIG. 3 illustrates elements of the power receiver 105 of FIG. 1 in more detail.

The power transmitter 101 includes a driver 201 which can generate a drive signal that is fed to the transmitter coil 103 which in return generates the electromagnetic power transfer signal, which provides a power transfer to the power receiver 105. The power transfer signal is provided (at least) during power transfer time intervals of the power transfer phase.

The driver 201 may typically comprise an output circuit in the form of an inverter, typically formed by driving a full or half bridge as will be well known to the skilled person.

The power transmitter 101 further comprises a power transmitter controller 203 which is arranged to control the operation of the power transmitter 101 in accordance with the desired operating principles. Specifically, the power transmitter 101 may include many of the functionalities required to perform power control in accordance with the Ki Specifications.

The power transmitter controller 203 is in particular arranged to control the generation of the drive signal by the driver 201, and it can specifically control the power level of the drive signal, and accordingly the level of the generated power transfer signal. The power transmitter controller 203 comprises a power loop controller controlling an operating point power level (such as the average power over a given time interval) of the power transfer signal in response to the power control messages received from the power receiver 105 during the power control phase. The power level operating point may thus be adapted in response to the power control messages received from the power receiver 105 and the power control loop may be arranged to set/determine/control the power level operating point.

In order to receive data and messages from the power receiver 105, the power transmitter 101 comprises a first communicator 205 which is arranged to receive data and messages from the power receiver 105 as well as transmit data and messages to the power receiver 105 (as will be appreciated by the skilled person, a data message may provide one or more bits of information).

In the approach, the communication is performed by modulation of a communication carrier signal that is generated by a first communication coil 207. The first communicator 205 is arranged to generate a communication drive signal which is fed to the first communication coil 207 to generate the communication carrier signal. The first communicator 205 may typically be arranged to generate the communication drive signal/communication carrier signal to have a substantially different frequency that the power transfer drive signal! power transfer signal. In many embodiments, the frequency of the communication carrier signal may be no less than 10, 100, or 500 times higher than the frequency of the power transfer signal. In many embodiments, the frequency of the communication drive signal! communication carrier signal may have a frequency of no less than 500kHz, 1 MHz, or 10 MHz. Specifically for an NFC implementation, the communication carrier signal frequency may be 13.56 MHz.

The first communicator 205 is arranged to modulate the communication drive signal! communication carrier signal in order to transmit data to the power receiver (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

In some embodiments, the first communicator 205 may for example receive data to be transmitted to the power receiver from the power transmitter controller 203 and in response generate the communication drive signal to have corresponding amplitude variations.

For communication from the power receiver to the power transmitter, the modulation of the communication drive signal may be a load modulation. The power receiver may be arranged to modulate the power transfer signal by varying a loading of the power transfer signal generated by the transmitter coil 103 in accordance with the data to be transmitted. The first communicator 205 may be arranged to sense variations in the voltage and/or current of the first communication coil 207 and to demodulate the load modulation based on these. The skilled person will be aware of the principles of load modulation and therefore these will not be described in further detail.

In many embodiments, the communication may be in accordance with the Near Field Communication, NFC, Specifications and the power receiver may specifically include NFC functionality. In many embodiments, the first communicator 205 and first communication coil 207 may implement (at least) the functionality of an NFC reader. Thus, in many embodiments, the communication drive signal/ communication carrier signal is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

In the system of FIGs. 1-3, the communication is during the power transfer phase performed in communication time intervals. Specifically, the transmitter controller 203 may comprise/ implement a synchronizer 206 which is arranged to synchronize the first communicator 205 such that the communication operation (typically both receiving and transmitting data) is performed in (and typically only in) the communication time intervals of the power transfer phase, i.e. in the time intervals that are assigned for communication. This may substantially improve communication performance, and in particular may reduce the interference to the communication by the power transfer signal.

The approach may utilizes a time division approach during the power transfer phase wherein communication (and potentially other operations such as foreign object detection) and power transfer may be performed in different time intervals thereby allowing the interference between these (specifically the impact of the power transfer on the foreign object detection/ communication) to be reduced substantially.

Specifically, for the wireless power transfer system, the power transfer signal is subject to a repeating time frame which comprises at least one power transfer time interval and one communication time interval.

The power transmitter may be arranged to reduce the power level of, and indeed in many embodiments fully switch off, the power transfer signal during the communication time intervals and the power receiver may in some embodiments be arranged to disconnect the load during the communication time intervals.

The power transmitter (and typically the power receiver) may then arrange for one or more operations (functions, processes, procedures) to be performed during the communication time interval, i.e. it may synchronize the execution of one or more operations of the power transmitter to occur during the communication interval. For example, it may typically synchronize the performance of the foreign object detection and communication to occur during the communication time interval. In this way, it can be achieved that the impact of the power transfer and the power transfer signal on the given operation, specifically the foreign object detection and the communication, can be reduced and often minimized.

FIG. 3 illustrates some exemplary elements of the power receiver 105.

The receiver coil 107 is coupled to a power receiver controller 301 which couples the receiver coil 107 to a load 303 via a switch 305 (i.e. it is a switchable load 305). The power receiver controller 301 includes a power control path which converts the power extracted by the receiver coil 107 into a suitable supply for the load 303. In addition, the power receiver controller 301 may include various power receiver controller functionality required to perform power transfer, and in particular functions required to perform power transfer in accordance with the Ki specifications.

In order to support communication from the power receiver 105 to the power transmitter 101 the power receiver 105 comprises a second communicator 307 and a second communication coil 309. The second communication coil 309 is arranged to couple to the first communication coil 207 and thus the communication carrier signal induces a current (at least an emf) in the second communication coil 309.

The second communicator 307 is coupled to the second communication coil 309 and is arranged to determine amplitude variations in the induced signal and to demodulate amplitude modulations of the communication carrier signal. Thus, the second communicator 307 is arranged to decode data transmitted from the power transmitter by amplitude modulation of the communication carrier signal. It will be appreciated that in other embodiments, the second communicator 307 may be arranged to decode data modulated onto the communication carrier signal using other modulation formats such as frequency or phase modulation.

The second communicator 307 is further arranged to load modulate the communication carrier signal in order to transmit data from the power receiver to the power transmitter. Specifically, the second communicator 307 may comprise a load (such as a capacitor) which depending on the data to transmit can be switched between being coupled to the second communication coil 309 and not being coupled to the second communication coil 309. These load modulations may then be detected by the first communicator 205 of the power transmitter.

In the specific example, the second communication coil 309 and the second communicator 307 may provide NFC compatible communication operation. Specifically, the second communication coil 309 may be arranged to provide functionality corresponding to an NFC tag and to decode data that has been ASK modulated onto the communication carrier signal in accordance with the NFC specifications.

Thus, the second communicator 307 is arranged to transmit data to the power transmitter by varying the loading of the receiver coil 107 in response to data to be transmitted to the power transmitter 101. The load variations are then detected and demodulated by the power transmitter 101 as will be known to the person skilled in the art.

In the example, the second communicator 307 is furthermore arranged to demodulate amplitude, frequency, and/or phase modulation of the communication carrier signal in order to retrieve data transmitted from the power transmitter.

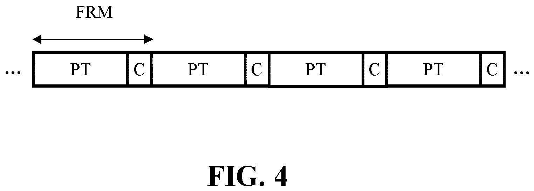

As mentioned, the system applies a repeating time frame during the power transfer phase where the time frame comprises at least one power transfer time interval and at least one communication time interval. An example of such a repeating time frame is illustrated in FIG. 4 where power transfer time intervals are indicated by PT and communication time intervals are indicated by C. In the example, each time frame FRM comprises only one communication time interval and one power transfer time interval. However, it will be appreciated that in other embodiments, other time intervals may also be included in a time frame or a plurality of communication time intervals and/or power transfer time intervals may be included in each time frame.

The power transfer driver 201 is controlled by the power transmitter controller 205 to only generate a drive signal with full power during the power transfer time intervals and to reduce power substantially, and typically switching off the power transfer signal, during the communication time intervals. Thus, in many embodiments, the driver 201 generates the drive signal and thus the power transfer signal during the power transfer time intervals, whereas the drive signal and thus the power transfer signal is switched off during the communication time intervals.

In the power transfer phase, the power transmitter is thus arranged to perform power transfer during the power transfer time interval of the time frames of the power transfer phase. Specifically, during these time intervals, the power transmitter and the power receiver may operate a power control loop (the power control loop may be based on communication within communication time intervals corresponding to repeating time intervals). Thus, the level of the power being transferred may be dynamically varied.

In the communication time intervals of the time frames of the power transfer phase, the power drive signal is however substantially reduced and typically switched off and thus no (or a reduced power level) power transfer signal is generated during the communication time intervals.

The communication between the power transmitter and the power receiver is during the power transfer phase performed in the communication time intervals, and typically is only performed in the communication time intervals. The communication via the first communication coil 207 and the second communication coil 309 is only performed in the communication time intervals and specifically the modulation of the communication carrier signal occurs only in the communication time intervals.

In the system, the first communicator 205 is accordingly arranged to only transmit data, and thus to only (e.g. amplitude) modulate the communication carrier signal, during the communication time intervals. Likewise, it will typically only seek to demodulate data during the communication time intervals.

Similarly, the second communicator 307 is arranged to only communicate during communication time intervals when in the power transfer phase. In the system, the second communicator 307 is accordingly arranged to only transmit data, and thus to only load modulate the communication carrier signal, during the communication time intervals. Likewise, it will typically only seek to demodulate data during the communication time intervals.

Thus, during the power transfer phase, the first communicator 205 and the second communicator 307 are arranged to only communicate during the communication time intervals. Such an approach may provide highly advantageous performance and in particular has been found to provide much improved communication performance. In particular, the approach reduces interference to the communication operation from the power transfer signal thereby providing a more reliable and robust communication with reduced bit errors.

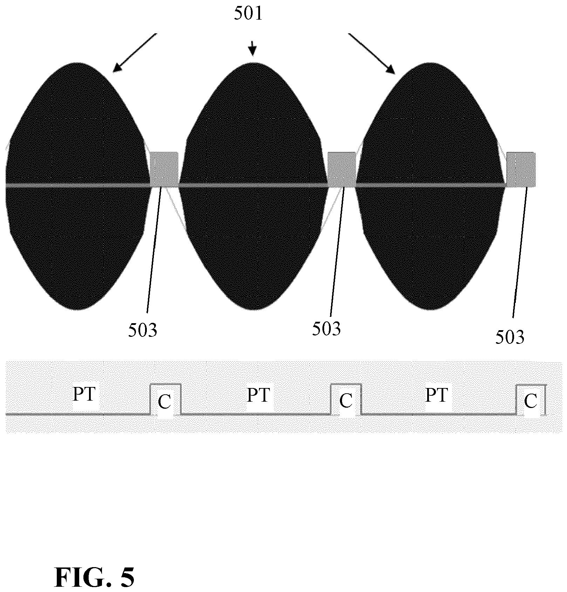

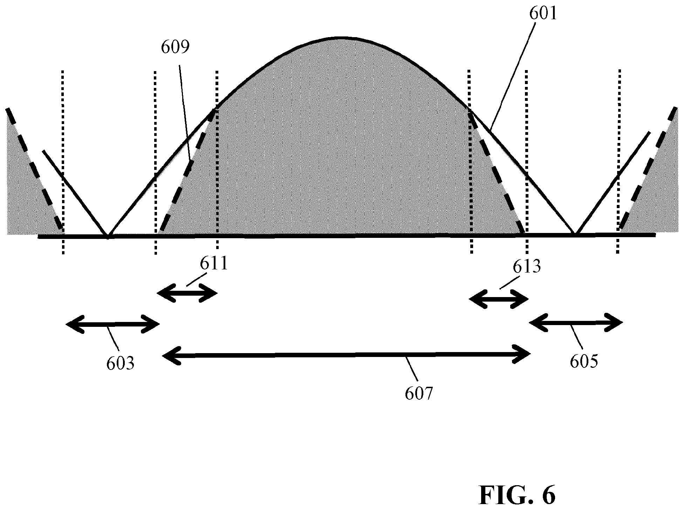

In many embodiments, the power driver 201 may be supplied by a time varying supply signal. In particular, the supply voltage to the output stage may be generated from an AC voltage, such as specifically from an AC mains voltage. The AC voltage may in some embodiments directly be used as a supply voltage to the output circuit (e.g. inverter) of the power driver 201. In many embodiments, the supply voltage may alternatively be generated as a rectified mains voltage. Thus, in many embodiments, the (absolute) supply voltage varies as a (possibly rectified) sine wave with a given period. As a result, the generated power transfer drive signal has a (sine wave) time varying amplitude as also shown in FIGs. 5 and 6. The amplitude has minimums (typically zero value) corresponding to the zero crossings of the input supply voltage and specifically to the main. Thus, the power transfer drive signal! power transfer signal is generated to have a period of the amplitude of half the period of the AC mains signal.

In such embodiments, the repeating time frame, and accordingly the power transfer time interval and communication time intervals, may be synchronized to the varying power supply signal and thus to the timing of the amplitude variations of the power transfer drive signal. In particular, the communication time intervals may be arranged to be at (include) the minimums of the amplitude (corresponding to the zero crossings of the mains signal).

Likewise, the communication driver 209 is arranged to generate the communication carrier signal to be synchronized to the varying power supply signal, and specifically it may be activated around the minima of the power supply.

Thus, in many embodiments, the repeating time frame, the power transfer time intervals, and the communication time intervals are (specifically in the power transmitter) synchronized to the time varying power supply signal, and specifically to the mains supply.

An example of how communication in communication time intervals of a repeating time frame could be performed in such an approach is shown in FIG. 5 which shows the power transfer signal 501 being generated during the power transfer time intervals PT and the modulated communication carrier signal 503 being generated during the communication time intervals C. FIG. 5 implements the time division between power transfer and communication with each operation being performed in the dedicated time interval.

FIG. 6 illustrates and example of the interrupted power transfer approach. FIG. 6 illustrates the power supply signal (voltage/current/power) 601 provided to the output circuit/inverter of the driver 201. In the example, this is a rectified AC signal and thus has minima, specifically reaching zero, at periodic intervals. Communication time intervals 603,605 are located around the minima and with a power transfer time interval 607 occurring between the communication time intervals 603, 605. In the example, the envelope/amplitude of the drive signal 609, and thus the power transfer signal, follows the power supply signal 601 during the power transfer time interval 607 (and in the example of FIG. 6 is scaled to coincide with the power supply signal 601 except for during transition time intervals 611, 613).

The transition time intervals are used to transition the power level of the drive signal/power transfer signal from the power level applied during the power transfer time interval to the power level during the communication time intervals. During the transition time intervals, the power level is typically quickly reduced/increased to change from the power level of the communication time intervals to a power level of the power transfer time intervals, or vice versa. As shown in FIG. 6, the drive signal 609 may have a higher rate of change than the power supply signal 601 during the transition time interval. The transition time intervals provide a faster transition than if the rectified power supply was simply followed (indeed in this case no communication time interval would result) Thus, a typically quick transition is performed to transition between power levels of a power transfer time interval and the adjacent communication time interval (in either direction). The transition time intervals may be considered part of the power transfer time intervals or may be considered to not be part of the transition time intervals.

In the approach, the power transmitter comprises a transition controller 209 which is arranged to control the (driver 201 to generate the) drive signal to perform a power level transition between a higher power level of the drive signal during a power transfer time interval and a lower power level of a communication time interval that is adjacent to the power transfer time interval. The transition controller 209 thus controls the transitioning of the drive signal/power transfer signal between the power transfer time intervals and communication time intervals. In some cases, the transition controller 209 may directly control the driver 201 e.g. by directly providing a control signal that adapts the power level. For example, the driver 201 may have a control input for both control by the transition controller 209 and the power transmitter controller 203. In other embodiments, the transition controller 209 may for example control the power transmitter controller 203 to control the driver 201. For example, the transition controller 209 may provide control data (such as a duration of the transition time intervals) to the power transmitter controller 203 which may adapt the control of the driver 201 in response to the received control data.

The control of the power level of the drive signal/power transfer signal may in many embodiments be by adapting/controlling e.g. a current or a voltage of the generated drive signal. However, in many embodiments, the power level may be controlled by the power transmitter controller 203 controlling the duty cycle and/or the frequency and/or the burst mode of the generated drive signal. In burst mode operation, power may be controlled by not transmitting power during the whole available power transfer time interval, i.e. the drive signal/power transfer signal may be generated only in bursts within the power transfer time intervals (in some cases this may be considered equivalent to e.g. increasing one or both of the transition time intervals 611, 613 (with e.g. no power being generated during some parts of the transition time intervals 611, 613). The power extracted by the power receiver is for a resonant power transfer system strongly dependent on the drive frequency and varying/adapting the frequency provides an efficient approach for controlling the power level. Similarly, the duty-cycle and burst mode provide an efficient control of the power level for a wireless power transfer system. In many embodiments, the power control loop may be arranged to control at least one of a duty cycle and a frequency of the drive signal.

The power transmitter further comprises an adapter 211 which is coupled to the transition controller 209 and which is arranged to adapt a property of the power level transition in dependence on the power level operating point for the power transfer. Thus, rather than perform a predetermined or constant transition, the power transmitter is arranged to dynamically adapt the transition operation based on the operating point power level of the power transfer. In many cases, the power level operating point may be determined by the duty-cycle, burst mode and/or frequency of the drive signal (typically set by the power control loop) and the transition property may have a (often predetermined) relationship to the frequency, burst mode and/or duty cycle of the drive signal.

The adapter 211 may specifically be arranged to adapt the transition profile such that a curve representing the power level of the drive signal has reduced high frequency content for a high power power transfer than for a low power power transfer and/or such that it has a more even distribution, and in particular such it has a reduced concentration of energy around harmonics, and specifically harmonics of the supply power frequency. For example, if the power transfer is currently operating with a relatively low amount of power being extracted by the power receiver, the transition may be adapted to be a fast, and e.g. linear, transition (and in the extreme case e.g. a direct switching on or off of the drive signal). Also transition time intervals 611 and 613 may vary in length within a single power interval, this can have advantageous effects on power transfer efficiency. However, if the power transfer is currently operating with a relatively high amount of power being extracted by the power receiver, the transition may be adapted to be a slow transition with a shaped profile that is smooth and has increased low high frequency content and/or with less concentration of energy around harmonics.

The approach may provide improved performance and/or operation in many embodiments and applications. It may in many scenarios result in improved trade-off between different and conflicting preferences such as improved efficiency, reduced electromagnetic interference, reduced mechanical noise etc. In particular, the approach may allow a more appropriate and typically improved trade-off between the acoustic noise and electromagnetic interference that may be caused to other electronic devices on one hand and the efficiency and power loss on the other hand.

In order to make the impact of switching off the drive signal/power transfer signal, communication time intervals may as mentioned be synchronized around the mains crossing thereby reducing or minimizing the size of the power change during the transition time interval. Nevertheless, a direct on/off switching of the power can cause potentially large harmonics to be generated and can result in the generated electromagnetic field/signal to include electromagnetic interference of substantial amplitude at potentially quite high frequencies. Such interference may substantially impact other close electronic circuitry and may not meet current strict e.g. regulatory specifications for EMI (ElectroMagnetic Interference).

Further, a direct on/off switching has been found to often cause the transmitter coil to generate audio noise. For example, the switching may result in variations in the electromagnetic field which may induce movement in proximal metallic elements which may result in an acoustic noise. This may be particularly pronounced as the induced movements may potentially in some cases be close to mechanical resources of many practical mechanical constructions.

In order to address this, rather than a step on/off switching, a more gradual transition may be performed where the power level is not instantly changed but with the transition occurring over some time. This may also be referred to as a ramping up and down as illustrated in FIG. 6. This may allow the induced harmonics to be reduced and/or spread out in frequency. This transition may be designed to allow the EMI Specifications (which are frequency dependent) to be met. Specifically, it may allow the transition to be such that the harmonics from the rectified mains signal can be spread/distributed in frequency so that the required EMI limits can be met. In addition, it can typically reduce the risk of audible noise being reduced and may reduce the risk of the generated electromagnetic field having strong components corresponding to mechanical resonance frequencies of e.g. enclosures of proximal devices (including of the power receiver and power transmitter).

However, disadvantages of such slow transitioning includes that it may affect the power transfer and e.g. change the power transfer behavior and operation. Significantly, the slow switching/transitioning may also result in a reduced efficiency of the power transfer. This can be explained as follows (for the example of a half bridge switching/output circuit of the driver 201): the wireless power system makes use of resonant system/current to be efficient as possible. For system to be efficient there needs to be a minimum amount of energy/current in the system to resonate from one state to the other (natural transition). If this amount of energy is not there, the switches need to force the resonate tank from one state, which is called hardswitching. Hardswitching comes with the cost of energy loss and high frequency noise due to the fast transitions.

In general, switching at lower power levels is relatively inefficient as a certain amount of current is required to switch efficiently. It is from this perspective desirable to seek to avoid operating at low power/current. The transition in such cases tend to cause inefficient operation because it is inherently a low current operation. Thus, typically, faster switching results in higher efficiency and less relatively power loss.

The Inventors have not only realized these issues but further realized that improved performance can often be achieved by a dynamic adaptation of the transition(s) based on the power level operating point for the power transfer. In particular, they have realized that this may provide an improved trade-off in many scenarios and embodiments. The transitioning may for example be dynamically adapted such that the operation reflects the most critical parameter for given situations. For example, the EMI and audible noise may typically provide more significant problems at higher power transfer levels whereas the loss of efficiency may in many cases be more problematic at lower power transfer levels. The adapter 211 may be arranged to adapt accordingly such that the relative mitigation of the undesired effects are adapted to reflect their relative criticality.

The adapter 211 may for example adapt the transition times dependent on the amount of power requested/transmitted. E.g. at a high power, a relative large transition time may be maintained to keep the mains harmonics/EMI below required limits and to reduce the risk of audible noise. At low power, it may set the transition time to be short, or even substantially zero, to ensure more efficient operation and reflecting that harmonics/EMI and audible noise is typically acceptable simply due to the lower power levels.

The adaptation of the transition operation may accordingly be dynamically updated depending on the (power level) operating point of the power transfer to provide improved performance with improved trade-off between the different conflicting preferences.

In some embodiments, the power level during the power transfer time interval may be constant. For example, a fixed voltage power supply may be applied to the output circuit of the driver 201 and the generated drive signal may have a constant amplitude during the power transfer time interval. However, in many embodiments, the power level during the power transfer time interval may vary, such as specifically having a sinusoidal shape resulting from a sinusoidally varying supply power for the driver 201.

In many embodiments, the power level during the communication time interval may be (substantially) zero with the drive signal being fully switched off. However, in some embodiments, a drive signal may be generated during the communication time interval but with a low(er) power level.

The power level during the communication time interval does not exceed the power level during the power transfer time interval, and typically the power level during the power transfer time interval (outside of the transition time intervals) is no less than a factor of e.g. 2,5,10 times higher than a maximum power level during the (adjacent) communication time interval (s).

In many embodiments, the driver 201 may be arranged to generate the drive signal to have a power level not less than a first power level threshold during (at least some part of the) power transfer time interval and to have a power level not exceeding a second power level threshold during (at least some) of the communication time interval. The first power level threshold is no less than the first threshold and is typically higher by no less than a factor of 2,5, or 10 times.

The transition controller 209 is in the example arranged to apply the dynamically varying transition approach both to the transition from a communication time interval to a power transfer time interval and to the transition from a power transfer time interval to a communication time interval, and thus both to the transition time intervals from/to the power transfer time intervals and from/to the communication time intervals. However, it will be appreciated that in some embodiments, the approach may only apply to some of the transition time intervals, such as specifically only to transition time intervals at the beginning or end of a transition time interval (or a communication time interval).

The duration of the transition time intervals may vary dynamically. However, in many embodiments, the duration of the transition time intervals does not exceed a duration of 5 mesc, 10 msec, or 25 msec. In many embodiments, a minimum duration of the transition time intervals is no less than 100µsec, 500µsec, or 1msec.

The power level of the driver 201 signal may correspond to the current/instantaneous amplitude (e.g. determined as a power, current and/or voltage) of the drive signal. It may be the current/instantaneous power averaged over a cycle of the power transfer signal (at the drive frequency).

A transition time interval may be a time interval in which the power level is transitioned between a power level of a given power transfer time interval and a power level of a communication time interval closest to the power transfer time interval! transition time interval. Typically, the power transfer time interval and the communication time interval are adjacent to each other and are only separated by the transition time interval (or equivalently the transition time interval may be considered an end part of the power transfer time interval closest to/adjacent to the communication time interval). In some cases, only part of the communication time interval may be used for communication. For example, in some cases a power transfer time interval may be reduced in size resulting in the communication time interval with reduced power extending beyond the time interval that is reserved/used for communication. Equivalently, it may be considered that the power transfer time interval and the closest communication time interval may be separated by one or more time intervals during which other (or no) operations are performed and the low power level of the communication time interval is maintained.

In the example of FIG. 6, the transition profile is a linear change from a starting power level to a finishing power level. For the transition from the communication time interval to the power transfer time interval (transition time interval 611), the initial power level is very small and may substantially be zero whereas the power transfer power level at the end of the transition time interval is a substantially higher value, and in the specific example corresponds to the level corresponding to the power level determined by the varying power supply. For the transition from the power transfer time interval to the communication time interval (transition time interval 613), the initial power level is a high value, and in the specific example corresponds to the level corresponding to the power level determined by the varying power supply whereas the power transfer power level at the end of the transition time interval is very small and may substantially be zero.

In many cases, the power transfer time interval power level may correspond to the level of the drive signal/power transfer signal when the parameter used to control the power level has reached the same value as for the midpoint of the power transfer time interval. It may in many scenarios correspond to a maximum power level setting (of the power transfer time interval) for the parameter controlling the power level. Specifically, it may correspond to the power level for which the transition value of the controlling parameter, such as the frequency, burst mode and/or duty cycle, is at a value determined for the power transfer time interval applied for the remaining part of (and or the middle of) the power transfer time interval.

Similarly, for the transition from the power transfer time interval to the communication time interval, the end power level is very small and may substantially be zero whereas the power transfer power level at the start of the transition time interval is a substantially higher value (similar to the previous description).

In many embodiments, the adapter 211 may be arranged to adapt a timing property of the transition. In particular the adapter 211 may be arranged to adapt a rate of change and/or a duration of the transition depending on the operating point of the power transfer.

For example, the transition may be a linear increase or decrease of the power levels as illustrated in FIG. 6. In such a case, the duration of the transition may be determined as a function of the current power level operating point. For example, the duration may be determined as a monotonically increasing function of the current power transfer level. Equivalently, the rate of change of the transition may be determined as a monotonically decreasing function of the current power transfer level.

As a specific example, if the current power transfer level corresponds to the power receiver extracting more than a given power threshold, the adapter 211 may set the transition time/ rate of change to a given predetermined value, and if the current power transfer level corresponds to the power receiver extracting less than a given power threshold, the adapter 211 may set the transition time/ rate of change to a different predetermined value.

In many embodiments and scenarios, such a threshold is advantageously in the interval from 500W to 1000W (measured e.g. as the power of the drive signal/the power extracted from the power transfer signal). In particular for power levels lower than 500W, the EMI and acoustic noise is often acceptable and meet requirements, whereas this is often not the case for power levels over 1000W. The duration of the transition for power transfer levels above 1000W may often be no less than 2 msec. The duration of the transition for power transfer levels below 500W may often be no more than 500µsec, and may typically be set to be substantially instantaneous, i.e. to be a direct transition.

In many embodiments, the adapter 211 may be arranged to set the transition to be a step transition when the power transfer level is sufficiently low, e.g. if it less than a given threshold. Such a step may often be advantageous in allowing a low complexity operation and reducing switching losses etc. Thus, for low power transfer levels, a simple switching with no ramping may be applied and with the ramping/gradual transitioning being limited to scenarios where the power transfer levels may be significant and result in unacceptable effects.

In some embodiments, the adapter 211 may be arranged to adapt a transition profile/shape for the transition. The transition profile may be the (function representing the) variation/change in power level as a function of time during the transition time interval. The variation/change may specifically be a normalized variation/change (normalized with respect to the total change in the power level). The transition profile may be in many such scenarios be thought of as the shape of the transition.

In the example of FIG. 6, the transition profile is a linear change from a starting power level to a finishing power level. The duration may in some cases be changed dynamically depending on the power level operating point while still maintaining a linear profile. However, in other cases, the shape/profile may be changed to result in a different overall frequency distribution of the resulting power transfer signal and specifically with a modified electromagnetic interference frequency distribution. For example, in some embodiments, a smoother transition profile may be selected which in particular has a smoother adaption to the power levels of the power transfer time interval and communication time interval. For example, the rate of change/derivative of the power level at the end of the transition time intervals may be designed to more closely match the derivative of the power level during respectively the communication time interval and power transfer time interval. In particular, the rate of change of the power level at the end/start of the transition time interval next to a communication time interval may be controlled to be close to zero.

The shaping and timing of the power levels during the transition time intervals may be controlled such that a desired frequency spectrum is achieved for the resulting drive signal/power transfer signal. In particular, the transition may be controlled to result in a drive signal/power transfer signal which reduces the mains harmonics and provide a more smooth frequency spectrum while also typically achieving reduced higher frequency components. Such approaches may typically allow improved compliance with EMI requirements and may often enable strict regulatory requirements to be met. The reduction in harmonics and a more smooth frequency spectrum may also substantially reduce the risk of exciting mechanical resonances thereby reducing the probability of audible noise being generated.

In the approach, the resulting drive signal, and accordingly the power transfer signal, can be seen as the product of the original drive signal multiplied by a window function which creates the communication time intervals and the transition time intervals. In the example, the original drive signal is a full wave rectified sinewave. The frequency of such a signal has a large number of harmonics of the original sinewave, i.e. in the present case typically of the 50Hz or 60Hz sinewave of the mains supply. Indeed, the full wave rectified signal can be seen as the result of a sine wave multiplied by a square wave (with values of +1 and -1) having a corresponding frequency. Thus, the frequency spectrum is the correlation of a single frequency and a sinc(f) function which itself is a sine function.

Using instant transition corresponds to the window function being a sinc(f) function and thus the resulting windowed drive signal/power transfer signal will have a frequency spectrum given by a correlation of a sinc(f) function and the frequency distribution of the original drive signal, which in the specific example is also a sinc(f) function. The frequency spectrum is thus in this case a correlation of two sinc(f) functions which results in a frequency spectrum that tends to have a significant harmonic structure (especially as both sinc(f) functions result from the same underlying periodicity (of the mains supply)). Thus, using hard-switching results in a concentration of energy around harmonic frequencies. This may be acceptable for lower power transfer levels but may be highly disadvantageous for higher power transfer levels and may e.g. prevent regulatory EMI requirements to be met.

If instead a window function is used that has less periodicity and typically more concentration at lower frequencies, the resulting correlation will result in the energy being more spread and more evenly distributed rather than being concentrated around harmonics. It may further allow energy to be more concentrated towards lower frequencies. In particular, using a window function that has a frequency distribution with energy concentrated at lower frequencies yet extending enough to spread the energy of the sinc(f) function of the full-wave rectified signal may in many embodiments result in a smooth(er)/more evenly distributed frequency spectrum.

For example, applying a linear transition may typically result in a more spread/distributed energy in the frequency domain with a reduction in the harmonic components. Even more even distribution can often be achieved using other shapes. For example, shapes known from window functions such as Hanning windows, Hamming windows, Hann windows etc. may used, and may typically provide more advantageous frequency distributions. The transition profile(s) may specifically be selected as one half of symmetric window functions, such as Hanning, Hamming, Hann, Welch, B-spline, etc window functions.

The adapter 211 may in some embodiments be arranged to switch between different transition profiles in dependence on the power level operating point. For example, for the power transfer level being below a given threshold, the adapter 211 may control the transition profile to be e.g. a triangular/linear transition profile (with e.g. a quick transition time). If the power transfer level is above the threshold, the adapter 211 may instead control the transition profile to correspond to e.g. a Hamming window, and possibly with a slower transition time.

As previously mentioned, the power level operating point may in many embodiments be the operating point that is controlled by the power control loop. It may in particular be the power control power level set by the power control. Thus, the power level operating point may be set/determined in response to/dependent on the power control messages received from the power receiver.

The power level operating point may in many embodiments be determined based on the power being supplied to an output circuit of the driver 201. For example, the adapter 211 may be arranged to measure a supply power property for the power supply to at least an output circuit of the power transfer driver. The supply power may be averaged over a suitable interval, such as over one or more power transfer time intervals and the resulting averaged input supply power may be used as a measure of the power level operating point.

The power level operating point may in some cases by a measure of the power extracted from the power transfer signal by the power receiver. The power level operating point may be a measure/amount of the power of the power transfer signal/the extracted power. The measure/amount of the power may be an average/median measure/amount over at least one communication time interval.

In some embodiments, the power level operating point may not be a dynamically measured value but may e.g. be determined as a desired or requested power of the wireless power transfer. For example, the power level operating point may be a reserved amount of power, or an amount of power requested by the power receiver, for the power transfer. The power level operating point may in some cases be a constant value for the power transfer or may in many embodiments be a variable value to reflect changes in then operating point/power transfer level.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

It will be appreciated that the reference to a preferred value does not imply any limitation beyond it being the value determined in the foreign object detection initialization mode, i.e. it is preferred by virtue of it being determined in the adaptation process. The references to a preferred value could be substituted for references to e.g. a first value.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. A power transmitter (101) for wirelessly providing power to a power receiver (105) via an inductive power transfer signal, the power transmitter (101) comprising:
a power transfer coil (103) arranged to generate the power transfer signal;
a driver (201) arranged to generate a drive signal for the power transfer coil (103), the driver (201) being arranged to, during a power transfer phase, generate the drive signal to employ a repeating time frame comprising at least a power transfer time interval and a communication time interval;
a communication coil (207) arranged to generate a communication carrier signal during communication time intervals;
a communication unit (205) arranged to communicate with the power receiver (105) using modulation of the communication carrier signal during communication time intervals;
a transition controller (209) arranged to control the drive signal to perform a power level transition between a higher power level of the drive signal during a power transfer time interval and a lower power level of a communication time interval closest to the power transfer time interval, the higher power level exceeding the lower power level by a factor of at least two times; and
an adapter (211) arranged to adapt a property of the power level transition in dependence on a power level operating point for the power transfer.

2. The power transmitter of claim 1 wherein the property of the power level transition includes a timing property of the transition.

3. The power transmitter of claim 2 wherein the timing property is at least one of a rate of change and a duration of the transition.

4. The power transmitter of claim 2 or 3 wherein the adapter (211) is arranged to increase a duration of the transition for an increasing level of the power level operating point.

5. The power transmitter of any previous claim wherein the adapter (211) is arranged to select a first value for the property of the power level transition for a value of the power level operating point being below a first threshold and to select a second value for the property of the power level transition for the value of the power level operating point being above a second threshold, the first threshold not exceeding the second threshold.

6. The power transmitter of any previous claim wherein the property of the power level transition is a transition profile.

7. The power transmitter of claim 6 wherein the adapter (211) is arranged to adapt the transition profile to have reduced higher frequency components for an increasing level of the power level operating point.

8. The power transmitter of any previous claim wherein the power level transition is from the lower power level to the higher power level.

9. The power transmitter of any previous claim 1-7 wherein the power level transition is from the higher power level to the lower power level.

10. The power transmitter of any previous claim wherein the adapter (211) is arranged to determine the power level operating point as a function of a supply power property for a power supply to at least an output circuit of the driver (201).

11. The power transmitter of any previous claim wherein the adapter (211) is arranged to set the power level transition to be a step transition in response to a determination that a value of the power level operating point is less than a threshold.

12. The power transmitter of any previous claim comprising a synchronizer (203) arranged to synchronize the communication time intervals to minima of a periodically varying power supply for at least an output circuit of the power transfer driver.

13. The power transmitter of any previous claim wherein a duration of the power level transition does not exceed 5 msec.

14. The power transmitter of any previous claim comprising a power control loop arranged to control the power level operating point in response to power control messages received from the power receiver (105).

15. A method of operation for a power transmitter (101) for wirelessly providing power to a power receiver (105) via an inductive power transfer signal, the method comprising:
a power transfer coil (103) generating the power transfer signal;
generating a drive signal for the power transfer coil (103) during a power transfer phase to employ a repeating time frame comprising at least a power transfer time interval and a communication time interval;
a communication coil (207) generating a communication carrier signal during communication time intervals;
communicating with the power receiver (105) using modulation of the communication carrier signal during communication time intervals;
controlling the drive signal to perform a power level transition between a higher power level of the drive signal during a power transfer time interval and a lower power level of a communication time interval closest to the power transfer time interval, the higher power level exceeding the lower power level by a factor of at least two times; and
adapting a property of the power level transition in dependence on a power level operating point for the power transfer.
